# EUROPÄISCHE PATENTSCHRIFT

(11) **EP 3 154 820 B1**
(45) Veröffentlichungstag und Bekanntmachung des Hinweises auf die Patenterteilung: **14.02.2018**
(21) Anmeldenummer: 15738611.1
(22) Anmeldetag: 13.07.2015
(51) Int. Cl.: B60P 7/08

(54) **ANSCHLAGVORRICHTUNG UND ZUGEHÖRIGES FLÄCHIGES SICHERUNGSMITTEL**
STOP DEVICE AND CORRESPONDING FLAT SECURING MEANS
DISPOSITIF DE BUTÉE ET MOYEN DE SÉCURITÉ PLAT ASSOCIÉ

(30) Priorität: 29.07.2014 DE 202014103520 U
(43) Veröffentlichungstag der Anmeldung: 19.04.2017
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Nunnenkamp, Jörg
(86) Internationale Anmeldenummer: PCT/EP2015/065944
(87) Internationale Veröffentlichungsnummer: WO 2016/015983

(56) Entgegenhaltungen:
- DE-A1-102007 018 254
- DE-U1-202005 015 419
- DE-U1-202010 007 280
- US-A1- 2005 141 980

## Beschreibung

Die Erfindung betrifft eine Anschlagvorrichtung zur Sicherung von Ladegut in einem Transportraum, mit einem Haken zum Eingriff in eine Öffnung einer Transportwand, und mit einem Verbindungselement zum Anschluss einer oder mehrerer Sicherungsmittel, wobei der Haken und das Verbindungselement eine Baueinheit definieren, wobei ferner der Haken mit einer gewölbten Anlagefläche ausgerüstet ist, welche in eingebautem Zustand eine die zugehörige Öffnung umgebende Fläche hintergreift und hier durch Schwenkbewegungen des Hakens gegenüber der Transportwand bis zu einem durch die Wölbung vorgegebenen Maß zulässt, und wobei sich der Haken aus zwei Hakenfortsätzen zusammensetzt, die jeweils flächenseitig, d. h. in Richtung der die Öffnung umgebenden Fläche, mit der gewölbten Anlagefläche ausgerüstet sind.

Eine Anschlagvorrichtung des eingangs beschriebenen Aufbaus wird in dem Gebrauchsmuster DE 20 2005 015 419 U1 vorgestellt. Hier geht es um eine Transportgutsicherung für Fahrzeuge. Dazu ist die Transportgutsicherung bzw. Anschlagvorrichtung mit einer Verzurröse ausgerüstet, die an einem beweglich ausgebildeten Verzurrbügel angeordnet ist. Der Verzurrbügel lässt sich in eine Ausnehmung im Fahrzeug einführen, die im Wesentlichen T-förmig ausgebildet ist.

Eine andere Anschlagvorrichtung wird beispielhaft in dem Gebrauchsmuster DE 20 2007 005 993 U1 der Anmelderin beschrieben. Bei dem Transportraum zur Aufnahme des Ladegutes kann es sich um die Ladefläche eines Fahrzeuges, eines Güteranhängers oder sogar den Frachtraum eines Flugzeuges handeln. Als denkbare Sicherungsmittel kommen Stangen, Seile, Gurte und insbesondere flächige Sicherungsmittel wie Sicherungsnetze zum Einsatz.

Heutige Anforderungen an solche Anschlagvorrichtungen sehen u.a. eine flexible und einfach zu wechselnde Anbringung an der Transportwand vor. Außerdem wird die Forderung gestellt, dass in das an die Anschlagvorrichtung angeschlossene eine oder mehrere Sicherungsmittel eingeleitete Kräfte einwandfrei über die Anschlagvorrichtung in die Transportwand abgeleitet werden. Dabei kommt es erneut auf einen funktionssicheren und flexiblen Betrieb an. Die an dieser Stelle bisher zur Verfügung stehenden Anschlagvorrichtungen genügen diesen sämtlichen Anforderungen nur eingeschränkt. Hier will die Erfindung Abhilfe schaffen.

Der Erfindung liegt das technische Problem zugrunde, eine derartige Anschlagvorrichtung zur Sicherung von Ladegut in einem Transportraum so weiter zu entwickeln, dass ein schneller Positionswechsel bei gleichzeitiger Funktionssicherheit und unter Berücksichtigung einer kostengünstigen Auslegung zur Verfügung gestellt wird.

Zur Lösung dieser technischen Problemstellung ist eine gattungsgemäße Anschlagvorrichtung zur Sicherung von Ladegut in einem Transportraum im Rahmen der Erfindung dadurch gekennzeichnet, dass die Öffnung als Schlüssellochöffnung ausgebildet ist, welche sich aus einer im Querschnitt schlitzartigen Nut und einer sich daran anschließenden Kreisöffnung zusammensetzt, und dass die beiden Hakenfortsätze an ein mittiges Anschlagelement anschließen, welches eine Längsbewegung des Hakens innerhalb der Schlüssellochöffnung begrenzt, wobei das mittige Anschlagelement gegenüber den gewölbten Anlageflächen als Abschluss der Hakenfortsätze vorspringt, so dass auf diese Weise Anschläge definiert werden, und wobei die Anschläge dafür sorgen, dass die Anschlagvorrichtung in der Schlüssellochöffnung ein gewisses Spiel in Längsrichtung besitzt, um das Ein- und Ausfädeln in die Schlüssellochöffnung und aus der Schlüssellochöffnung zu erleichtern.

Die beiden Hakenfortsätze liegen sich meistens diametral gegenüber. Außerdem verfügen die beiden Hakenfortsätze im Allgemeinen über eine entgegengesetzte Erstreckung.

Die beiden Hakenfortsätze sind jeweils flächenseitig mit der gewölbten Anlagefläche ausgerüstet. D.h., die der die Öffnung umgebenden Fläche zugewandte jeweilige Oberfläche des Hakenfortsatzes ist gewölbt ausgelegt bzw. als gewölbte Anlagefläche ausgebildet. Tatsächlich verfügt die gewölbte Anlagefläche im Querschnitt über eine kreisbogenförmige Gestalt.

Außerdem ist die Auslegung so getroffen, dass die beiden Hakenfortsätze an das demgegenüber mittige Anschlagelement anschließen. Das Anschlagelement sorgt dafür, dass insbesondere Längsbewegungen des Hakens innerhalb der Öffnung begrenzt werden. Dazu überragt das Anschlagelement die jeweilige Anlagefläche des Hakenfortsatzes um ein den zugehörigen Anschlag definierendes Maß.

Hierbei geht die Erfindung insgesamt von der Erkenntnis aus, dass die an dieser Stelle in oder an der Transportwand vorhandene Schlüssellochöffnung mit der Nut und im Wesentlichen Kreisöffnung ausgebildet ist. Dadurch kann der Haken mit seinen beiden diametral zueinander angeordneten und mit entgegengesetzter Erstreckung ausgerüsteten Hakenfortsätzen besonders einfach und elegant in die Schlüssellochöffnung eingefädelt werden.

Die Breite des mittigen Anschlagelementes ist dabei im Allgemeinen an die Breite der Nut des Schlüsselloches angepasst, so dass durch das Wechselspiel zwischen dem Anschlagelement und der Nut der Haken prinzipiell die bereits angesprochene Längsbewegung innerhalb der Öffnung vollführen kann. Zugleich begrenzt die Länge des Anschlagelementes im Vergleich zur Gesamtlänge der Schlüssellochöffnung derartige Längsbewegungen.

Als Folge hiervon lässt sich der Haken besonders einfach und schnell in die zugehörige Schlüssellochöffnung einführen und auch wieder entfernen. Durch das Wechselspiel zwischen dem Anschlagelement und der Nut wird der Haken und folglich die Anschlagvorrichtung im Ganzen darüber hinaus einwandfrei und mit geringem vorgegebenen Spiel in der Längsrichtung innerhalb der Öffnung geführt. Auf diese Weise gelingt eine einfache und flexible Anbringung, die zugleich die erforderliche Funktionssicherheit zur Verfügung stellt.

Dadurch, dass erfindungsgemäß der Haken mit der gewölbten Anlagefläche ausgerüstet ist bzw. die beiden Hakenfortsätze die betreffende gewölbte Anlagefläche aufweisen, werden darüber hinaus in eingebautem Zustand des Hakens Schwenkbewegungen gegenüber der Transportwand zugelassen. Meistens erstrecken sich die jeweiligen Schlüssellochöffnungen in oder an der Transportwand in senkrechter Erstreckung, so dass die Schwenkbewegungen des Hakens und folglich der Anschlagvorrichtung insgesamt quer hierzu, d.h., in horizontaler Richtung, zugelassen werden. Solche horizontalen Schwenkbewegungen tragen dem Umstand Rechnung, dass im Transportraum bzw. auf der Transportfläche befindliche Ladegüter insbesondere Horizontalbewegungen im Betrieb vollführen.

Da die erfindungsgemäße Anschlagvorrichtung ebenfalls in der Lage ist, solche horizontalen Schwenkbewegungen ausführen zu können, werden mit solchen Bewegungen verbundene und von den Ladegütern auf die jeweilige Anschlagvorrichtung ausgeübte Kräfte vorteilhaft und bis zum gewissen Grad aufgenommen. Das alles geschieht, ohne dass die Gefahr besteht, dass der Haken gegenüber der Öffnung insgesamt abschert. Dadurch wird die Funktionssicherheit deutlich gesteigert.

Hinzu kommt, dass die Baueinheit aus dem Haken und dem Verbindungselement regelmäßig als Kunststoffspritzgussteil ausgebildet ist und sich folglich einfach und kostengünstig herstellen lässt. Dadurch werden gepaart mit der erhöhten Funktionssicherheit die verfolgten Ziele erreicht.

Nach weiterer vorteilhafter Ausgestaltung ist das Verbindungselement an das Anschlagelement angeschlossen. Außerdem verfügt das Verbindungselement meistens über eine Öse für die Kopplung mit dem Sicherungsmittel. An dieser Stelle kommt im Allgemeinen ein flächiges Sicherungsmittel zum Einsatz. Bei diesem flächigen Sicherungsmittel handelt es sich um ein solches, welches im Regelfall mit einer Sicherungsfläche und mit randseitig der Sicherungsfläche vorgesehenen Anschlagvorrichtungen ausgerüstet ist, wie sie zuvor im Detail beschrieben worden sind.

Das flächige Sicherungsmittel kann vorteilhaft als Trennwand zur Unterteilung des Transportraumes genutzt werden. Da die einzelnen randseitig der Sicherungsfläche vorgesehenen Anschlagvorrichtungen einfach und flexibel in den zugehörigen Schlüssellochöffnungen platziert und hierin verankert werden können, gelingt eine schnelle und bedarfsweise vorgenommene Unterteilung des Transportraumes in ein oder mehrere Teilräume. Dadurch lässt sich der Transportraum beispielsweise an die sich im Zuge der Auslieferung ändernde Zusammensetzung des Ladegutes unschwer anpassen. Im Regelfall ist damit zu rechnen, dass bei einer Auslieferungsfahrt der vom Transportgut eingenommene Teilraum des Transportraumes zunehmend kleiner wird, wenn nicht auf der Fahrt weiteres Ladegut aufgenommen und transportiert wird. Jedenfalls lässt sich die mit Hilfe des erfindungsgemäß realisierten flächigen Sicherungsmittels realisierte Trennwand flexibel und schnell an die Erfordernisse anpassen.

Bei der Sicherungsfläche als Bestandteil des flächigen Sicherungsmittels handelt es sich vorteilhaft um ein Netzwerk, eine Plane oder dergleichen. Im Allgemeinen wird man hier auf ein Netzwerk zurückgreifen, welches unschwer die erforderliche Stabilität zur Aufnahme etwaig auftretender Beschleunigungs- und Verzögerungskräfte zur Verfügung stellt. Ganz besonders bevorzugt ist die Sicherungsfläche als Netzwerk aus sich kreuzenden Gurtbändern aufgebaut. Bei den Gurtbändern handelt es sich vorteilhaft um gewebte oder gewirkte Bänder aus Kunststofffäden. Dabei können die einzelnen Gurtbänder in ihren Kreuzungspunkten miteinander vernäht werden. Es ist aber auch möglich, dass die Gurtbänder im jeweiligen Kreuzungspunkt durch ineinandergreifende jeweils gurteigene Kunststofffäden miteinander gekoppelt werden. In diesem Fall sind die Kunststofffäden im Kreuzungspunkt durch eine Maschenbindung miteinander verbunden. Bei der Maschenbindung kann es sich um eine Wirkverbindung handeln. Verwiesen wird in diesem Zusammenhang auf das Gebrauchsmuster DE 20 2012 101 216 U1 der Anmelderin, welches ein entsprechend aufgebautes flächiges Sicherungsmittel beschreibt.

Selbstverständlich können auch andere Sicherungsmittel mit der erfindungsgemäßen Anschlagvorrichtung kombiniert werden, beispielsweise solche, wie sie im Gebrauchsmuster DE 20 2010 007 280 U1 der Anmelderin im Detail beschrieben werden. Hierauf sei ausdrücklich hingewiesen.

Im Folgenden wird die Erfindung anhand einer lediglich ein Ausführungsbeispiel der darstellenden Zeichnung näher erläutert; es zeigen:
- Fig. 1: die erfindungsgemäße Anschlagvorrichtung perspektivisch,
- Fig. 2: den Gegenstand nach der Fig. 1 in einer Seitenansicht,
- Fig. 3: eine Aufsicht auf den Gegenstand nach Fig. 1,
- Fig. 4: eine Ansicht aus Richtung A nach Fig. 3, und
- Fig. 5: ein flächiges Sicherungsmittel, welches mit der Anschlagvorrichtung nach den Fig. 1 bis 4 ausgerüstet ist.

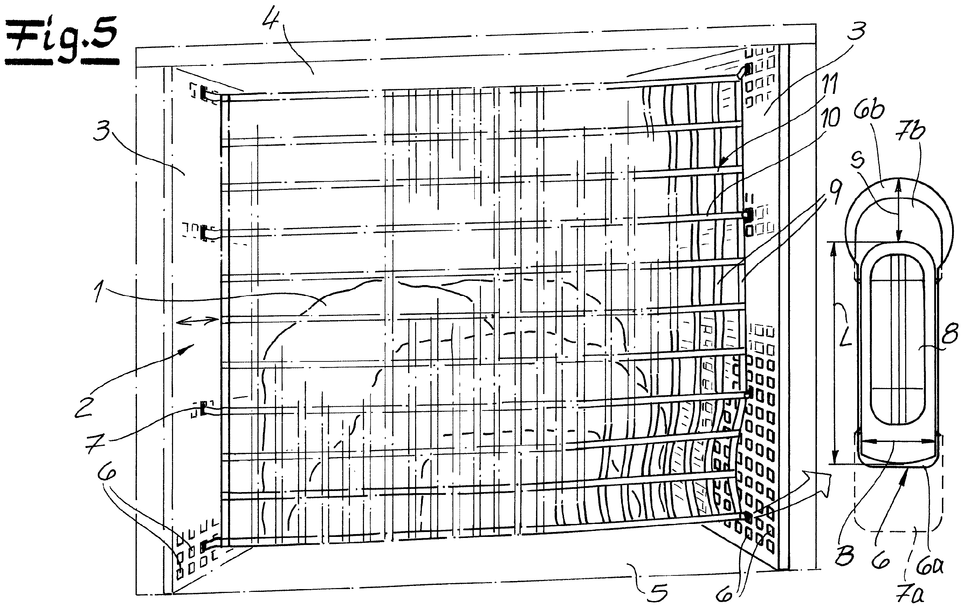

In den Figuren ist eine Anschlagvorrichtung zur Sicherung von Ladegut 1 in einem Transportraum 2 dargestellt. Bei dem Transportraum 2 handelt es sich ausweislich der Fig. 5 und nicht einschränkend um einen Kastenaufbau bei einem LKW-Kleintransporter. Der Transportraum 2 wird von seitlichen Transportwänden 3 und einem oberseitigen Dach 4 begrenzt. Die einzelnen Ladegüter 1 sind auf einer Ladefläche 5 platziert.

An den seitlichen Transportwänden 3 erkennt man jeweils Öffnungen 6. Bei den Öffnungen 6 handelt es sich im Ausführungsbeispiel und erfindungsgemäß um Schlüssellochöffnungen 6, wie der vergrößerte Ausschnitt in der Fig. 5 deutlich macht. Die Schlüssellochöffnungen 6 sind vorliegend jeweils in Reihen und in senkrechter Erstreckung in bzw. an der jeweils vertikal orientierten seitlichen Transportwand 3 vorgesehen. Dazu mag die Transportwand 3 mit jeweils innenseitigen Lochblechen ausgerüstet sein, welche die Schlüssellochöffnungen 6 aufweisen.

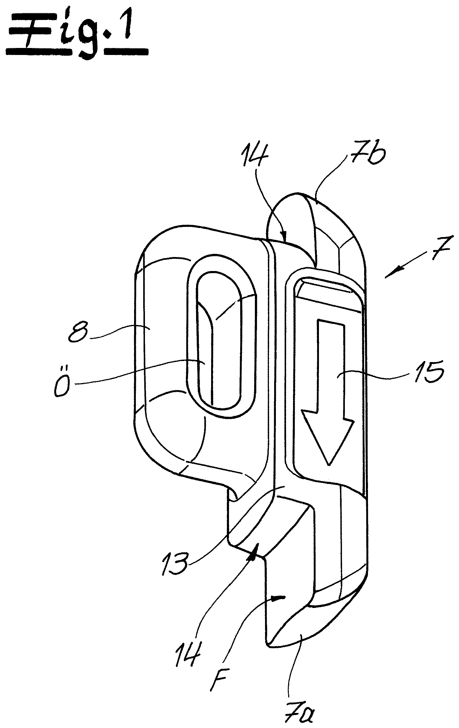

Die jeweilige Schlüssellochöffnung 6 setzt sich aus einer im Querschnitt schlitzartigen Nut 6a und einer sich daran anschließenden Kreisfläche bzw. Kreisöffnung 6b zusammen. In die Öffnung bzw. Schlüssellochöffnung 6 greift ein Haken 7a, 7b der in den Fig. 1 bis 4 dargestellten Anschlagvorrichtung ein. Das erkennt man in der vergrößerten Darstellung der Fig. 5 und wird nachfolgend noch näher erläutert.

Neben dem Haken 7a, 7b zum Eingriff in die Öffnung 6 der Transportwand 3 setzt sich die Anschlagvorrichtung nach den Fig. 1 bis 4 noch aus einem Verbindungselement 8 zum Anschluss einer oder mehrerer Sicherungsmittel 9, 10, 11 zusammen. Bei dem Sicherungsmittel 9, 10, 11 handelt es sich ausweislich der Fig. 5 um ein flächiges Sicherungsmittel, welches eine Sicherungsfläche 9, 10, 11 aus sich kreuzenden Gurtbändern 9, 10 darstellt. Die sich kreuzenden und im Ausführungsbeispiel vertikalen Gurtbänder 9 und horizontalen Gurtbänder 10 sind jeweils in Kreuzungspunkten 11 miteinander verbunden. Das kann durch Nähbefestigungspunkte erfolgen.

Im Ausführungsbeispiel handelt es sich bei den Gurtbändern 9, 10 um gewebte oder gewirkte Bänder aus Kunststofffäden. Außerdem sind die Gurtbänder 9, 10 in diesem Fall in den Kreuzungspunkten 11 durch ineinandergreifende jeweils gurteigene Kunststofffäden miteinander gekoppelt. Tatsächlich sind die Gurtbänder 9, 10 durch eine Maschenbindung in den Kreuzungspunkten 11 miteinander verbunden. Bei der Maschenbindung handelt es sich um eine Wirkverbindung.

Der Haken 7a, 7b und das Verbindungselement 8 definieren eine Baueinheit 7, 8. Tatsächlich ist die Baueinheit 7, 8 als Kunststoffspritzgussteil ausgeführt.

Das Verbindungselement 8 verfügt über eine Öse Ö für die Kopplung mit dem flächigen Sicherungsmittel 9, 10, 11. Tatsächlich ist die Öse Ö so ausgelegt und gestaltet, dass durch die Öse Ö im Ausführungsbeispiel ein jeweils horizontal verlaufendes Gurtband hindurchgeschleift und hieran festgelegt werden kann. Dazu mag durch die Öffnung Ö eine Öse des horizontalen Gurtbandes 10 hindurchgefädelt und diese Öse im Kreuzungspunkt mit der Sicherungsfläche 9, 10, 11 vernäht oder durch eine Wirkverbindung verbunden sein.

Erfindungsgemäß und von besonderer Bedeutung ist der Umstand, dass der Haken 7a, 7b mit einer gewölbten Anlagefläche F ausgerüstet ist. Tatsächlich verfügt der betreffende Hakenfortsatz 7a, 7b über die gewölbte Anlagefläche F, und zwar an seiner der die Öffnung 6 umgebenden Fläche 12 zugewandten Oberfläche. Bei der Fläche 12 handelt es sich im Ausführungsbeispiel um die Fläche des Lochbleches zwischen den einzelnen Schlüssellochöffnungen 6.

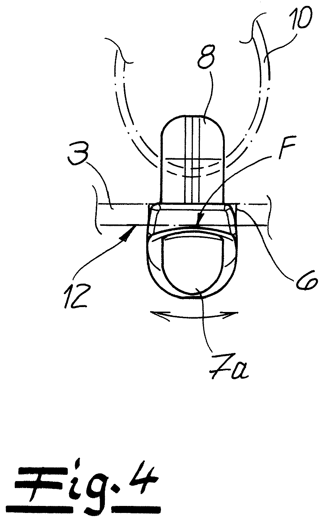

In eingebautem und in der Fig. 5 dargestellten Zustand hintergreift der Haken 7a, 7b die betreffende Fläche 12, welche die zugehörige Öffnung 6 umgibt. Da folglich der Haken 7a, 7b und mit ihm die gesamte Anschlagvorrichtung an der Fläche 12 anliegt und wegen der Wölbung werden folglich Schwenkbewegungen des Hakens 7a, 7b gegenüber der Transportwand 3 bis zu einem durch die Wölbung vorgegebenen Maß zugelassen. Diese Schwenkbewegungen sind in der Ansicht nach der Fig. 4 durch einen Doppelpfeil angedeutet. Da sich die Schlüssellochöffnungen 6 im Wesentlichen senkrecht erstrecken, ist die Anschlagvorrichtung insgesamt in der Lage, Schwenkbewegungen in im Wesentlichen horizontaler Richtung ausführen zu können, wie dies ein entsprechender Doppelpfeil in der Fig. 5 andeutet.

In dieser horizontalen Richtung wirken primär Kräfte, die vom Ladegut 1 auf die Sicherungsmittel 9, 10, 11 ausgeübt und über die Anschlagvorrichtung in die zugehörige Transportwand 3 eingeleitet werden müssen. Die erfindungsgemäß erreichte Flexibilität bzw. Schwenkbeweglichkeit sorgt dafür, dass die Anschlagvorrichtung durch eine entsprechende Krafteinleitung nicht innerhalb der Öffnung 6 abgeschert wird.

Bei einer vergleichenden Betrachtung der Fig. 1 bis 4 wird deutlich, dass sich die beiden Hakenfortsätze 7a, 7b diametral mit entgegengesetzter Erstreckung gegenüberliegen. Außerdem verfügt die jeweils oberseitige gewölbte Anlagefläche F der jeweiligen Hakenfortsätze 7a, 7b über eine im Querschnitt kreisbogenförmige Gestalt, wie insbesondere die Fig. 4 deutlich macht. Der Hakenfortsatz 7a besitzt eine rechteckförmige Gestalt, während der Hakenfortsatz 7b bogenförmig gestaltet ist. Die Tatsache trägt dem Umstand Rechnung, dass der Hakenfortsatz 7b in der Kreisöffnung 6b aufgenommen wird, während der Hakenfortsatz 7a in die Nut 6a eingreift.

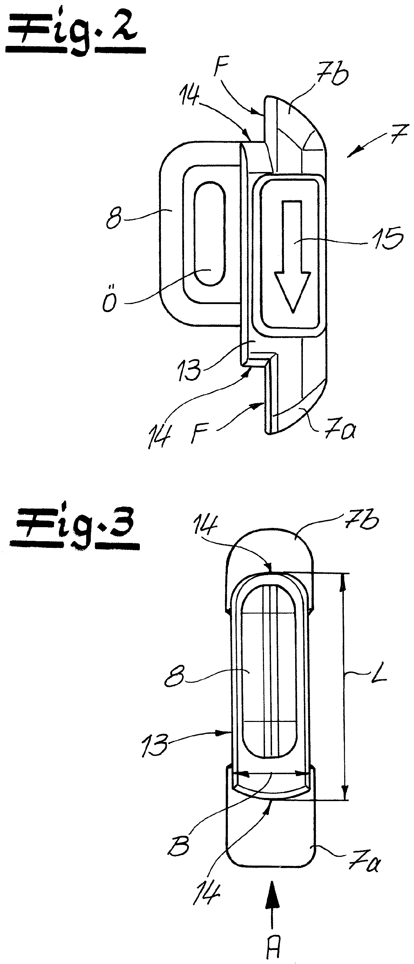

Die beiden Hakenfortsätze 7a, 7b schließen an ein mittiges Anschlagelement 13, an. Insbesondere anhand der Fig. 1 und 2 erkennt man, dass das mittige Anschlagelement 13 gegenüber den gewölbten Anlageflächen F als Abschluss der Hakenfortsätze 7a, 7b vorspringt, so dass auf diese Weise Anschläge 14 definiert werden. Diese Anschläge 14 sorgen dafür, dass die Anschlagvorrichtung in der Öffnung 6 ein gewisses Spiel S in Längsrichtung besitzt, um das Ein- und Ausfädeln in die Öffnung 6 und aus der Öffnung 6 zu erleichtern.

Tatsächlich verfügt das Anschlagelement 13 über eine Breite B, welche an die lichte Weite der Nut 6a der Schlüssellochöffnung 6 im Beispielfall angepasst ist. Dadurch wird die Anschlagvorrichtung in Längsrichtung der Nut 6a geführt und kann insbesondere demgegenüber in Querrichtung nicht ausweichen.

Da die gesamte Länge L des Anschlagelementes 13 kleiner als die Gesamtlänge der Schlüssellochöffnung 6 S + L ist, ergibt sich automatisch das zuvor bereits angesprochene Spiel S der Anschlagvorrichtung in Längsrichtung der Schlüssellochöffnung 6.

Man erkennt, dass das Verbindungselement 8 mit der Öffnung Ö oberseitig an das mittige Anschlagelement 13 angeschlossen ist bzw. auf diesem aufsteht. Außerdem ist die gesamte Anschlagvorrichtung seitlich noch mit einer Richtungsanzeige 15 ausgerüstet, bei welcher es sich im Ausführungsbeispiel um einen eingeprägten Pfeil bzw. Prägepfeil 15 handelt. Mit Hilfe der Richtungsanzeige 15 wird die Montagerichtung der Anschlagvorrichtung beim Einsetzen in das zugehörige Schlüsselloch 6 vorgegeben und verdeutlicht.

## Patentansprüche

1. Anschlagvorrichtung zur Sicherung von Ladegut (1) in einem Transportraum (2), mit einem Haken (7a, 7b) zum Eingriff in eine Öffnung (6) einer Transportwand (3), und mit einem Verbindungselement (8) zum Anschluss einer oder mehrerer Sicherungsmittel (9, 10, 11), wobei
der Haken (7a, 7b) und das Verbindungselement (8) eine Baueinheit (7, 8) definieren, wobei ferner
der Haken (7a, 7b) mit einer gewölbten Anlagefläche (F) ausgerüstet ist, welche in eingebautem Zustand eine die zugehörige Öffnung (6) umgebende Fläche (12) hintergreift und hierdurch Schwenkbewegungen des Hakens (7a, 7b) gegenüber der Transportwand (3) bis zu einem durch die Wölbung vorgegebenen Maß zulässt, und wobei
sich der Haken (7a, 7b) aus zwei Hakenfortsätzen (7a, 7b) zusammensetzt, die jeweils flächenseitig mit der gewölbten Anlagefläche (F) ausgerüstet sind
**dadurch gekennzeichnet, dass**
- die Öffnung (6) als Schlüssellochöffnung (6) ausgebildet ist, welche sich aus einer im Querschnitt schlitzartigen Nut (6a) und einer sich daran anschließenden Kreisöffnung (6b) zusammensetzt, und dass
- die beiden Hakenfortsätze (7a, 7b) an ein mittiges Anschlagelement (13) anschließen, welches eine Längsbewegung des Hakens (7a, 7b) innerhalb der Schlüssellochöffnung (6) begrenzt, wobei
- das mittige Anschlagelement (13) gegenüber den gewölbten Anlageflächen (F) als Abschluss der Hakenfortsätze (7a, 7b) vorspringt, so dass auf diese Weise Anschläge (14) definiert werden, und wobei
- die Anschläge (14) dafür sorgen, dass die Anschlagvorrichtung in der Schlüssellochöffnung (6) ein gewisses Spiel (S) in Längsrichtung besitzt, um das Ein- und Ausfädeln in die Schlüssellochöffnung (6) und aus der Schlüssellochöffnung (6) zu erleichtern.

2. Vorrichtung nach Anspruch 1, **dadurch gekennzeichnet, dass** sich die beiden Hakenfortsätze (7a, 7b) diametral mit entgegengesetzter Erstreckung gegenüberliegen.

3. Vorrichtung nach einem der Ansprüche 1 oder 2, **dadurch gekennzeichnet, dass** das Verbindungselement (8) an das Anschlagelement (13) angeschlossen ist.

4. Vorrichtung nach einem der Ansprüche 1 bis 3, **dadurch gekennzeichnet, dass** das Verbindungselement (8) eine Öse (Ö) für die Kopplung mit beispielsweise einem flächigen Sicherungsmittel (9, 10, 11) aufweist.

5. Vorrichtung nach einem der Ansprüche 1 bis 4, **dadurch gekennzeichnet, dass** die Baueinheit (7, 8) als Kunststoffspritzgussteil ausgebildet ist.

6. Vorrichtung nach einem der Ansprüche 1 bis 5, **dadurch gekennzeichnet, dass** eine gesamte Länge (L) des Anschlagelementes (13) kleiner als eine Gesamtlänge der Schlüssellochöffnung (6) (S + L) ist, so dass sich automatisch das angesprochene Spiel (S) der Anschlagvorrichtung in Längsrichtung der Schlüssellochöffnung (6) ergibt.

7. Vorrichtung nach einem der Ansprüche 1 bis 6, **dadurch gekennzeichnet, dass** das Anschlagelement (13) über eine Breite (B) verfügt, welche an eine lichte Weite einer Nut (6a) der Schlüssellochöffnung (6) angepasst ist.

8. Flächiges Sicherungsmittel (9, 10, 11), mit einer Sicherungsfläche (9, 10, 11) und mit randseitig der Sicherungsfläche (9, 10, 11) vorgesehenen Anschlagvorrichtungen, **dadurch gekennzeichnet, dass** die jeweilige Anschlagvorrichtung gemäß einem der Ansprüche 1 bis 7 ausgebildet ist.

9. Sicherungsmittel nach Anspruch 8, **dadurch gekennzeichnet, dass** dieses als Trennwand zur Unterteilung des Transportraumes (2) ausgebildet ist.

10. Sicherungsmittel nach Anspruch 8 oder 9, **dadurch gekennzeichnet, dass** die Sicherungsfläche (9, 10, 11) als Netzwerk, Plane oder dergleichen ausgebildet ist.

11. Sicherungsmittel nach einem der Ansprüche 8 bis 10, **dadurch gekennzeichnet, dass** die Sicherungsfläche (9, 10, 11) als Netzwerk aus sich kreuzenden Gurtbändern (9, 10) aufgebaut ist.

12. Sicherungsmittel nach Anspruch 11, **dadurch gekennzeichnet, dass** die Gurtbänder (9, 10) als gewebte oder gewirkte Bänder aus Kunststofffäden ausgebildet sind.

13. Sicherungsmittel nach Anspruch 12, **dadurch gekennzeichnet, dass** die Gurtbänder (9, 10) in den jeweiligen Kreuzungspunkten (11) durch ineinandergreifende jeweils gurteigene Kunststofffäden miteinander gekoppelt sind.

## Claims

1. Fixing device for securing loads (1) in a transporting space (2), with a hook (7a, 7b) for engaging in an opening (6) of a transporting wall (3), and with a connecting element (8) for attaching one or more securing means (9, 10, 11), wherein
the hook (7a, 7b) and the connecting element (8) define a module (7, 8), wherein, in addition
the hook (7a, 7b) is provided with a cambered contact surface (F) which in the assembled state engages behind an area surrounding the corresponding opening (6) and hereby allows pivoting movements of the hook (7a, 7b) with regard to the transporting wall (3) up to a magnitude predetermined by the cambering, and wherein
the hook (7a, 7b) is composed of two hook extensions (7a, 7b) which on the surface side each have the cambered contact surface (F),
**characterised in that**
- the opening (6) is designed as a keyhole opening (6) which is composed of a groove (6a) that is slit-like in cross-section and an adjoining circular opening (6b), and **in that**
- the two hook extensions (7a, 7b) adjoin a central stop element (13) which limits a longitudinal movement of the hook (7a, 7b) within the keyhole opening (6), wherein
- the central stop element (13) projects vis-à-vis the cambered contact surfaces (F) as a termination of the hook extensions (7a, 7b), so that in this way stops (14) are formed, and wherein
- the stops (14) ensure that the fixing device has a certain amount of play (S) in the longitudinal direction within the keyhole opening (6) in order facilitate threading into the key hole opening (6) and threading out of the keyhole opening (6).

2. Device according to claim 1, **characterised in that** the two hook extensions (7a, 7b) are diametrically opposed with opposite extents.

3. Device according to any one of claims 1 to 2, **characterised in that** the connection element (8) is connected to the fixing element (13).

4. Device according to any one of claims 1 to 3, **characterised in that** the connecting element (8) comprises an eye (Ö) for coupling with a planar securing means (9, 10, 11) for example.

5. Device according to any one of claims 1 to 4, **characterised in that** the module (7, 8) is designed as a plastic injection moulded component.

6. Device according to any one of claims 1 to 5, **characterised in that** an entire length (L) of the fixing element (13) is smaller than an entire length of the keyhole opening (6) (S + L) so that the aforementioned play (S) of the fixing device is automatically produced in the longitudinal direction of the keyhole opening (6).

7. Device according to any one of claims 1 to 6, **characterised in that** the fixing element (13) has a width (B) which is adapted to a clearance of a groove (6a) of the keyhole opening (6).

8. Planar securing means (9, 10, 11) with a securing surface (9, 10, 11) and with fixing means provided on the edge of the securing surface (9, 10, 11), **characterised in that** the relevant fixing device is designed according to any one of claims 1 to 7.

9. Securing means according to claim 8, **characterised in that** this is designed as a partition wall to divide up the transporting space (2).

10. Securing means according to claim 8 or 9, **characterised in that** the securing surface (9, 10, 11) is designed as a meshwork, tarpaulin or suchlike.

11. Securing means according to any one of claims 8 to 10, **characterised in that** the securing surface (9, 10, 11) is constructed as a meshwork of straps (9, 10) crossing each other.

12. Securing means according to claim 11, **characterised in that** the straps (9, 10) are designed as woven or wrought bands of synthetic treads.

13. Securing means according to claim 12, **characterised in that** at the respective crossing points (11) the straps (9, 10) are connected to each other by interlocking synthetic threads each forming part of the strap.

## Revendications

1. Dispositif d'accrochage destiné à sécuriser des produits chargés (1) dans un espace de transport (2), avec un crochet (7a, 7b) destiné à s'engager dans une ouverture (6) d'une paroi de transport (3) et avec un élément de liaison (8) pour le raccordement d'un ou de plusieurs moyens de sécurisation (9, 10, 11),
le crochet (7a, 7b) et l'élément de liaison (8) définissant un ensemble (7, 8), alors que par ailleurs,
le crochet (7a, 7b) est équipé d'une surface d'appui (F) bombée, qui en position montée s'accroche par l'arrière dans une surface (12) entourant l'ouverture (6) associée et admet de ce fait des pivotements du crochet (7a, 7b) par rapport à la paroi de transport (3) jusque dans une mesure prédéfinie par le bombement,
le crochet (7a, 7b) se compose de deux prolongements de crochet (7a, 7b) dont chacun est équipé sur le côté de sa surface de la surface d'appui (F) bombée,
**caractérisé en ce que**
- l'ouverture (6) est conçue sous la forme d'une ouverture en trou de serrure (6) qui se compose d'une rainure (6a) à section transversale en forme de fente et d'une ouverture circulaire (6b) qui s'y raccorde, et **en ce que**
- les deux prolongements de crochet (7a, 7b) se raccordent sur un élément de butée (13) central, lequel limite un déplacement longitudinal du crochet (7a, 7b) à l'intérieur de l'ouverture en trou de serrure (6),
- l'élément de butée (13) central saillant par rapport aux surfaces d'appui (F) bombées, en tant que terminaison des prolongements de crochet (7a, 7b), de sorte à définir de cette manière des butées (14), et
- les butées (14) assurant que le dispositif d'accrochage dispose d'un certain jeu (S) dans la direction longitudinale, dans l'ouverture en trou de serrure (6), pour faciliter l'insertion dans l'ouverture en trou de serrure (6) et l'extraction hors de l'ouverture en trou de serrure (6).

2. Dispositif selon la revendication 1, **caractérisé en ce que** les deux prolongements de crochet (7a, 7b) sont diamétralement en vis-à-vis, avec une extension opposée.

3. Dispositif selon l'une quelconque des revendications 1 ou 2, **caractérisé en ce que** l'élément de liaison (8) est raccordé sur l'élément de butée (13).

4. Dispositif selon l'une quelconque des revendications 1 à 3, **caractérisé en ce que** l'élément de liaison (8) comporte un oeillet (Ö) destiné à être couplé avec par exemple un moyen de sécurisation (9, 10, 11) plan.

5. Dispositif selon l'une quelconque des revendications 1 à 4, **caractérisé en ce que** l'ensemble (7, 8) est conçu sous la forme d'une pièce en plastique moulée par injection.

6. Dispositif selon l'une quelconque des revendications 1 à 5, **caractérisé en ce qu'**une longueur totale (L) de l'élément de butée (13) est inférieure à une longueur totale de l'ouverture en trou de serrure (6) (S + L), de sorte à donner lieu au jeu (S) évoqué du dispositif d'accrochage dans la direction longitudinale de l'ouverture en trou de serrure (6).

7. Dispositif selon l'une quelconque des revendications 1 à 6, **caractérisé en ce que** l'élément de butée (13) dispose d'une largeur (B) qui est adaptée à une largeur intérieure d'une rainure (6a) de l'ouverture en trou de serrure (6).

8. Moyen de sécurisation (9, 10, 11) plan, avec une surface de sécurisation (9, 10, 11) et avec des dispositifs d'accrochage prévus du côté marginal de la surface de sécurisation (9, 10, 11), **caractérisé en ce que** le dispositif d'accrochage en question est conçu selon l'une quelconque des revendications 1 à 7.

9. Moyen de sécurisation selon la revendication 8, caractérisé en que ce dernier est conçu en tant que cloison de séparation pour diviser l'espace de transport (2).

10. Moyen de sécurisation selon la revendication 8 ou 9, **caractérisé en ce que** la surface de sécurisation (9, 10, 11) est conçue sous la forme d'un filet, d'une bâche ou similaires.

11. Moyen de sécurisation selon l'une quelconque des revendications 8 à 10, **caractérisé en ce que** la surface de sécurisation (9, 10, 11) est structurée sous forme de filet en sangles (9, 10) croisées.

12. Moyen de sécurisation selon la revendication 11, **caractérisé en ce que** les sangles (9, 10) sont conçues sous la forme de bandes tissées ou tricotées en fils de matière plastique.

13. Moyen de sécurisation selon la revendication 12, **caractérisé en ce que** dans les points de croisement (11) respectifs, les sangles (9, 10) sont couplées les unes aux autres par des fils en matière plastique s'engageant les uns dans les autres, chaque fois propres à la sangle.
